# EUROPEAN PATENT SPECIFICATION

(11) **EP 4 392 500 B1**
(45) Date of publication and mention of the grant of the patent: **09.12.2026**
(21) Application number: 22777150.8
(22) Date of filing: 25.08.2022
(51) Int. Cl.: C09J 123/08, C09J 123/14

(54) **ULTRA LOW VISCOSITY HOT MELT ADHESIVE COMPOSITION**
HEISSSCHMELZKLEBSTOFFZUSAMMENSETZUNG MIT ULTRANIEDRIGER VISKOSITÄT
COMPOSITION ADHÉSIVE THERMOFUSIBLE À TRÈS FAIBLE VISCOSITÉ

(30) Priority: 25.08.2021 US 202163260563 P
(43) Date of publication of application: 03.07.2024
(73) Proprietor: H.B. Fuller Company, St. Paul, Minnesota 55164-0683 (US)
(72) Inventor: DAVIS, Kevin P., Woodbury, Minnesota 55129 (US); KREITZ-STILL, Sydne M., St.Paul, Minnesota 55106 (US)
(74) Representative: Maiwald GmbH
(86) International application number: PCT/US2022/075458
(87) International publication number: WO 2023/028557

(56) References cited:
- US-A1- 2018 334 597

## Description

### BACKGROUND

The invention is directed to formulating low application temperature hot melt adhesive compositions.

Many hot melt adhesive compositions can form good adhesive bonds to fibrous substrates used in packaging materials (e.g., Kraft paper and corrugated cardboard packaging materials) and maintain those bonds when exposed to a wide range of temperatures (e.g., from 4 °C to 60 °C). However, existing hot melt adhesive compositions typically are applied at temperatures of 135 °C, or even 177 °C; such application temperatures are considered high application temperatures. These high application temperatures are necessary due to the high viscosity of these compositions. To be commercially useful, a hot melt composition must be molten at the application temperature and must exhibit a viscosity suitable for use in existing hot melt applicators and hot melt application equipment. For many of these hot melt adhesive compositions, a suitable viscosity cannot be achieved at temperatures less than 135 °C; some of these compositions cannot achieve a suitable viscosity at temperatures less than 177 °C. These high temperatures correspond to a relatively high energy (i.e., heat) input to achieve a molten state, can cause the adhesive composition to emit odors, can increase the risk that contacting the adhesive composition in its molten state will cause burns, and can induce degradation of the composition.

Many attempts have been made to achieve low application temperature hot melt adhesive compositions. However, these attempts have resulted in hot melt adhesive compositions that suffer from various defects including, e.g., failure to exhibit sufficient bond strength across a sufficiently broad temperature range and failure to exhibit sufficient heat resistance for packaging applications.

Adding wax to a hot melt adhesive composition can have a deleterious effect on the bond strength of the composition. Decreasing the amount of polymer in a hot melt adhesive composition can also decrease the bond strength of the composition. Increasing the wax content and decreasing the polymer content has the potential of decreasing the heat resistance of a hot melt adhesive composition. Heat resistance is an important property of a hot melt packaging adhesive composition because packages travel in commerce and are stored in warehouses where they are exposed to high temperatures, often temperatures as high as 49 °C.

The rate at which a hot melt adhesive composition melts is also an important factor in commercial adhesive bonding processes related to packaging. If the hot melt adhesive composition takes too long to melt at a desired temperature, it will generally be unsuited for commercial application at that temperature.

There is a need for a hot melt adhesive composition that can be applied at a very low application temperature. There is also a need for a hot melt adhesive composition that can be applied at a very low application temperature and is suitable for use in bonding materials used in packaging applications. There is also a need for a hot melt adhesive composition that exhibits a low viscosity in the molten state and also exhibits good bond strength and good heat resistance.

US 2018/334597 A1 discloses a hot melt adhesive composition that includes a first ethylene alpha-olefin copolymer having a density of no greater than 0.90 grams per cubic centimeter, a second styrene block copolymer, tackifying agent, synthetic wax having a melting point of at least 70° C. and a heat of fusion of at least 200 Joules/gram, and a third polymer selected from the group consisting of ethylene-polar comonomer copolymer, propylene-alpha-olefin copolymer, and propylene homopolymer.

### SUMMARY

The invention is defined by the appended independent claims 1 and 2 to which reference is now made. Advantageous features are set out in the dependent claims. The invention also relates to an article according to appended claim 15.

In one aspect, the invention features a hot melt adhesive composition that includes less than 35 % by weight polymer, the polymer including at least 10 % by weight, based on the weight of the hot melt adhesive composition, ethylene/alpha-olefin copolymer and at least 4 % by weight, based on the weight of the hot melt adhesive composition, propylene polymer, at least 20 % by weight wax, and at least 30 % by weight tackifying agent, the composition exhibiting a viscosity of no greater than 2000 centipoise (cP) at 107 °C.

In one embodiment, the composition exhibits a viscosity of no greater than 1800 cP at 107 °C. In another embodiment, the composition exhibits a viscosity of no greater than 1500 cP at 107 °C. In other embodiments, the composition exhibits a viscosity of no greater than 1200 cP at 107 °C.

In some embodiments, the composition exhibits a softening point of less than 99 °C. In other embodiments, the composition exhibits a softening point of no greater than 98 °C. In one embodiment, the composition exhibits a softening point of no greater than 97 °C.

In another embodiment, the tackifying agent has a softening point less than 120 °C. In some embodiments, the tackifying agent has a softening point of no greater than 115 °C. In other embodiments, the tackifying agent has a softening point of no greater than 110 °C.

In one embodiment, the amount of ethylene/alpha olefin copolymer in the composition is greater than the amount of propylene polymer in the composition.

In one embodiment, the propylene polymer is a single-site catalyzed propylene polymer and exhibits a density of no greater than 0.90 g/cm³. In another embodiment, the propylene polymer is a single-site catalyzed propylene polymer and exhibits a viscosity of no greater than 10,000 cP at 190 °C.

In some embodiments, the propylene polymer is a single-site catalyzed polymer that exhibits a density of no greater than 0.90 g/cm³ and a viscosity of no greater than 10,000 cP at 190 °C, and the ethylene/alpha olefin copolymer is a single-site catalyzed polymer that exhibits a density of no greater than 0.90 g/cm³ and a viscosity of no greater than 9000 cP at 190 °C. In one embodiment, the amount of ethylene/alpha olefin copolymer in the composition is greater than the amount of propylene polymer in the composition.

In other embodiments, the ethylene/alpha-olefin copolymer is selected from the group consisting of ethylene-butene, ethylene-octene, ethylene-hexene, and combinations thereof, and the propylene polymer is selected from the group consisting of polypropylene, propylene-ethylene, and combinations thereof.

In other embodiments, the composition includes at least 40 % by weight of the tackifying agent.

In one embodiment, the wax has a drop melting point no greater than 105 °C.

In some embodiments, the wax has a drop melting point of no greater than 105 °C, and the tackifying agent has a softening point no greater than 110 °C.

In one embodiment, the composition includes from 10 % by weight to 30 % by weight ethylene/alpha-olefin copolymer, from 4 % by weight to 20 % by weight propylene polymer, from 20 % by weight to 35 % by weight wax, and from 40 % by weight to 50 % by weight tackifying agent.

**In** another embodiment, the composition includes from 10 % by weight to 30 % by weight ethylene/alpha-olefin copolymer, from 4 % by weight to 15 % by weight propylene polymer, from 20 % by weight to 35 % by weight of a wax having a drop melting point of no greater than 105 °C, and from 40 % by weight to 50 % by weight of a tackifying agent having a softening point less than 120 °C.

**In** another embodiment, the composition includes from 10 % by weight to 30 % by weight ethylene/alpha-olefin copolymer, from 4 % by weight to 15 % by weight propylene polymer, from 20 % by weight to 30 % by weight of a wax having a drop melting point of no greater than 105 °C, and from 40 % by weight to 50 % by weight of a tackifying agent having a softening point less than 120 °C.

**In** other embodiments, the composition includes from 10 % by weight to 30 % by weight ethylene/alpha-olefin copolymer, from 4 % by weight to 15 % by weight propylene polymer, the amount of ethylene/alpha-olefin copolymer being greater than the amount of propylene polymer, from 20 % by weight to 35 % by weight of a wax having a drop melting point of no greater than 105 °C, and from 40 % by weight to 50 % by weight of a tackifying agent having a softening point less than 120 °C.

**In** one embodiment, the composition exhibits a fiber tearing bond at 4 °C.

**In** other embodiments, the composition exhibits a PAFT of at least 45 °C. **In** some embodiments, the composition exhibits a PAFT of at least 49 °C.

**In** another embodiment, the wax has a drop melting point of at least 80 °C.

**In** some embodiments, the adhesive composition exhibits a Gardner color no greater than 2.

**In** another aspect, the invention features a hot melt adhesive composition that includes less than 35 % by weight polymer, the polymer including ethylene/alpha-olefin copolymer and propylene polymer, a tackifying agent having a softening point less than 120 °C, and a wax having a drop melting point of no greater than 105 °C, the hot melt adhesive composition exhibiting a viscosity of no greater than 2000 cP at 107 °C.

**In** other aspects, the invention features a hot melt adhesive composition that includes less than 35 % by weight polymer, the polymer being selected from the group consisting of ethylene/alpha-olefin copolymer, and a combination of ethylene/alpha-olefin copolymer and propylene polymer, from 20 % by weight to 50 % by weight of a tackifying agent having a softening point less than 120 °C, and from 20 % by weight to 35 % by weight of a wax having a drop melting point of no greater than 105 °C, the hot melt adhesive composition exhibiting a viscosity no greater than 1200 cP at 107 °C and a PAFT greater than 45 °C, and being free of paraffin wax. In one embodiment, the composition includes propylene polymer. In some embodiments, the composition exhibits a fiber tearing bond at 4 °C. In some embodiments, the composition exhibits a PAFT of at least 50 °C. In other embodiments, the composition further includes a tackifying agent having a softening point at least 120 °C. In some embodiments, the amount of tackifying agent having a softening point less than 120 °C is greater than the amount of tackifying agent having a softening point of at least 120 °C.

In another aspect, the invention features an article that includes a first substrate, a second substrate, and the hot melt adhesive composition disclosed herein, the first substrate being adhered to the second substrate through the adhesive composition.

The invention features a hot melt adhesive composition that exhibits low viscosity at 107 °C, good bond strength, and good heat resistance. The invention also features a hot melt adhesive composition that melts at 107 °C at a rate that is sufficiently fast for use in commercial hot melt adhesive applicators. The ability to apply the hot melt adhesive composition at a relatively low application temperature has the potential to decrease the amount of energy needed to achieve a molten state and apply the composition, improve the safety of using the composition, and decrease the odors emitted by the composition.

Other features and advantages will be apparent from the following description of the preferred embodiments and from the claims.

### GLOSSARY

In reference to the invention, these terms have the meanings set forth below:
The term "ethylene/alpha-olefin copolymer" means a non-functionalized copolymer derived from greater than 50 % by weight ethylene and alpha-olefin comonomer.

The term "propylene polymer" means a non-functionalized polymer derived from greater than 50 % by weight propylene and optionally alpha-olefin comonomer.

The term "wax" as used herein means a polymer or an oligomer having a heat of fusion greater than 100 Joules per gram (J/g) and a viscosity no greater than 750 centipoise (cP) at 190 °C.

### DETAILED DESCRIPTION

The present inventors have surprisingly and unexpectedly discovered that a hot melt adhesive composition that exhibits a low viscosity at 107 °C, good bond strength and good heat resistance can be achieved by employing a low level of base polymer, a tackifying agent that has a softening point of less than 120 °C, and a wax having a drop melt point of no greater than 105 °C.

The hot melt adhesive composition includes less than 35 % by weight of a polymer that includes an ethylene/alpha-olefin copolymer, a propylene polymer, or a combination thereof, a wax (e.g., a wax having a drop melting point no greater than 105 °C), and a tackifying agent (e.g., a tackifying agent having a softening point no greater than 120 °C), and exhibits a viscosity of no greater than 2000 centipoise (cP), no greater than 1800 cP, no greater than 1750 cP, no greater than 1500 cP, no greater than 1200 cP, or even no greater than 1000 cP at 107 °C.

The hot melt adhesive composition preferably melts at a rate that is suitable for use in hot melt applicators that are heated to an application temperature of 107 °C. The softening point of the hot melt adhesive composition impacts the rate at which the composition melts at a given temperature. The hot melt adhesive composition preferably exhibits a softening point of less than 100 °C, less than 99 °C, preferably no greater than 98 °C, no greater than 97 °C, from 70 °C to 98 °C, or even from 75 °C to 98 °C.

The hot melt adhesive composition also exhibits good heat resistance. One useful measure of heat resistance is peel adhesion failure temperature (PAFT). The composition preferably exhibits a PAFT of at least 45 °C, at least 46 °C, at least 49 °C, preferably at least 50 °C, or even more preferably at least 52 °C. Another useful measure of heat resistance is shear adhesion failure temperature (SAFT). The composition preferably exhibits a SAFT of at least 68 °C, at least 71 °C, or even at least 74 °C.

The composition also exhibits good fiber tearing bonds. Preferably the composition exhibits at least 40 % fiber tear, at least 50 % fiber tear, at least 60 % fiber tear, or even at least 70 % fiber tear at -29 °C, preferably at 4 °C, at -18 °C, at room temperature, preferably at 49 °C, at 54 °C, at 60 °C, more preferably at 4 °C and 49 °C, or even more preferably at 4 °C and 60 °C, and combinations thereof.

The composition can be formulated to exhibit an initial Gardner color of no greater than 3, no greater than 2, or even no greater than 1.

### POLYMER

The total polymer content in the hot melt adhesive composition is less than 35 % by weight and optionally is no greater than 32 % by weight, no greater than 30 % by weight, no greater than 27 % by weight, greater than 10 %, at least 14 %, at least 20 %, from 14 % by weight to 35 % by weight, or even from 20 % by weight to 32 % by weight. The polymer component of the hot melt adhesive composition includes an ethylene/alpha-olefin copolymer (e.g., a single site catalyzed ethylene/alpha-olefin copolymer), optionally a propylene polymer (e.g., a single site catalyzed propylene polymer), and optionally other additional polymers. Preferred hot melt adhesive compositions include an ethylene/alpha-olefin copolymer and a propylene polymer, more preferably at least 10 % by weight of an ethylene/alpha-olefin copolymer and at least 4 % by weight of a propylene polymer. The amount of propylene polymer present in the hot melt adhesive composition can be greater than the amount of ethylene/alpha-olefin copolymer. Preferably the amount of ethylene/alpha-olefin copolymer present in the hot melt adhesive composition is greater than the amount of propylene polymer. Useful ratios of the amount of ethylene/alpha-olefin copolymer to the amount of propylene polymer include, e.g., no greater 1:2, at least 1:1, at least 1:1.5, at least 1.3:1, at least 1.4:1, no greater than 4:1, no greater than 3:1, no greater than 2.5:1, preferably from 1.3:1 to 2:1, more preferably from 1.4:1 to 2:1.

### ETHYLENE/ALPHA-OLEFIN COPOLYMER

The ethylene/alpha-olefin copolymer includes greater than 50 % by weight ethylene. Useful ethylene/alpha-olefin copolymers exhibit a melt flow rate of at least 500 g/10 min, at least 700 g/10 min, or even at least 1000 g/10 min as measured according to ASTM D1238A-20 at 190 °C using a 2.16 kg load. Useful ethylene/alpha-olefin copolymers also exhibit a viscosity no greater than 9000 cP at 190 °C and a density of no greater than 0.90 g/cm³, no greater than 0.89 g/cm³, or even no greater than 0.88 g/cm³. The ethylene/alpha-olefin copolymer is derived from ethylene and an alpha-olefin co-monomer, e.g., alpha-olefin monomers having at least three carbon atoms, at least four carbon atoms, at least six carbon atoms, at least eight carbon atoms, and combinations of such monomers. Suitable alpha-olefin co-monomers include, e.g., propylene, butene, pentene, hexene, heptene, octene, nonene, decene, dodecene, 4-methyl-pentene-1, 3-methyl pentene-1,3,5,5-trimethyl-hexene-1, 5-ethyl-1-nonene, 1,9-decadiene, and combinations thereof. Specific examples of suitable ethylene/alpha-olefin copolymers include ethylene-propylene, ethylene-butene, ethylene-hexene, ethylene-octene, and combinations thereof.

The ethylene/alpha-olefin copolymer can be prepared using a variety of catalysts including, e.g., a single site catalyst (e.g., metallocene catalysts (e.g., metallocene-catalyzed ethylene/alpha-olefin copolymers)), multiple single site catalysts, non-metallocene heteroaryl catalysts, and combinations thereof.

Useful ethylene/alpha-olefin copolymers are commercially available under a variety of trade designations including, e.g., the AFFINITY series of trade designations from The Dow Chemical Company (Midland, Michigan) including AFFINITY GA 1900 and AFFINITY GA 1875 ethylene-octene copolymers.

The hot melt adhesive composition includes at least 10 % by weight, no greater than 30 % by weight, no greater than 25 % by weight, from 10 % by weight to 30 % by weight, or even from 10 % by weight to 20 % by weight ethylene/alpha-olefin copolymer.

### PROPYLENE POLYMER

The propylene polymer includes greater than 50 % by weight propylene and exhibits a heat of fusion of from 5 J/g to 70 J/g. The propylene polymer preferably exhibits a viscosity no greater than 10,000 cP at 190 °C and a density of no greater than 0.90 g/cm³, no greater than 0.89 g/cm³, or even no greater than 0.88 g/cm³. Useful propylene polymers include, e.g., propylene homopolymers, propylene/alpha-olefin copolymers that are derived from greater than 50 % by weight propylene and at least one alpha-olefin co-monomer, and combinations thereof. Useful alpha-olefin comonomers include, e.g., alpha-olefin monomers having at least two carbon atoms, at least four carbon atoms, from four carbon atoms to eight carbon atoms, and combinations of such monomers, including, e.g., ethylene, butene, pentene, hexene, heptene, octene, nonene, decene, dodecene, 4-methyl-pentene-1, 3-methyl pentene-1,3,5,5-trimethyl-hexene-1, 5-ethyl-1-nonene, 1,9-decadiene, and combinations thereof. Specific examples of suitable propylene-alpha-olefin copolymers include propylene-ethylene, propylene-butene, propylene-hexene, propylene-octene, and combinations thereof.

The propylene polymer can be prepared using a variety of catalysts including, e.g., a single site catalyst (e.g., metallocene catalysts (e.g., metallocene-catalyzed propylene polymers)), multiple single site catalysts, non-metallocene heteroaryl catalysts, and combinations thereof.

Useful propylene polymers are commercially available under a variety of trade designations including, e.g., the VISTAMAXX series of trade designations from ExxonMobil Chemical Company (Houston, Texas) including VISTAMAXX 8880, VISTAMAXX 8780, and VISTAMAXX 8380 propylene-ethylene copolymers, the LICOCENE series of trade designations from Clariant Int'l Ltd. (Muttenz, Switzerland) including, e.g., LICOCENE PP 2602, LICOCENE PP 3602, and LICOCENE PP 1602 propylene-ethylene copolymers, and propylene homopolymers available under the L-MODU series of trade designations from Idemitsu Kosan Co., Ltd. (Japan) including L-MODU S410 polypropylene and L-MODU S400 polypropylene.

When a propylene polymer is present, the hot melt adhesive composition includes at least 4 % by weight, at least 5 % by weight, at least 10 % by weight, from 4 % by weight to 20 % by weight, from 0 % by weight to 15 % by weight, from 4 % by weight to 15 % by weight, from 5 % by weight to 20 % by weight, or even from 5 % by weight to 15 % by weight propylene polymer.

### ADDITIONAL OPTIONAL POLYMERS

One useful class of additional optional polymers is the class of hydrogenated styrene block copolymers including, e.g., styrene-ethylene-butylene-styrene, styrene-ethylene-propylene-styrene, styrene-ethylene-butylene-styrene-styrene, and combinations thereof. Other useful additional optional polymers include non-single site catalyzed ethylene polymers (e.g., polyethylene homopolymers and ethylene/alpha-olefin copolymers), functionalized, non-single site catalyzed ethylene homopolymers and copolymers (e.g., EPOLENE C16 and EPOLENE C18 maleated polyethylene from Westlake Chemical Corporation (Houston, Texas)), vinyl polymers (e.g., ethylene vinyl acetate), and combinations thereof.

To the extent that an additional polymer other than an ethylene/alpha-olefin copolymer and a propylene polymer is present in the hot melt adhesive composition, the hot melt adhesive composition includes no greater than 10 % by weight, no greater than 5 % by weight, no greater than 4 % by weight, or even no greater than 3 % by weight of the optional additional polymer other than ethylene/alpha-olefin copolymer and propylene polymer.

### WAX

The hot melt adhesive composition also includes at least one wax. Useful waxes have a heat of fusion of greater than 100 J/g, or even greater than 200 J/g, and a drop melting point of at least 80 °C, at least 90 °C, and preferably no greater than 105 °C. The wax component optionally can additionally include a wax with a drop melting point greater than 105 °C, but the overall wax component (i.e., the wax or the mixture of waxes, where more than one wax is present in the hot melt adhesive composition) has a drop melting point of no greater than 105 °C. Suitable classes of waxes include, e.g., Fischer-Tropsch waxes, polyolefin waxes (e.g., polypropylene waxes and polyethylene waxes), microcrystalline waxes, metallocene waxes, and combinations thereof.

Useful Fischer-Tropsch waxes are commercially available under a variety of trade designations including, e.g., the SASOLWAX series of trade designations from Sasol Wax North America Corporation (Hayward, California) including, e.g., SASOLWAX C80 Fischer-Tropsch wax, and the SARAWAX series of trade designations from Shell Corporation (Malasia) including, e.g., SHELL GTL SARAWAX SX70 and SARAWAX SX80 Fischer-Tropsch waxes.

Useful polyethylene waxes are commercially available under a variety of trade designations including, e.g., the EPOLENE series of trade designations from Westlake Chemical Corporation (Houston, Texas) including, e.g., EPOLENE N-34 and EPOLENE N-35 polyethylene waxes, and the POLYWAX series of trade designations including POLYWAX 400, POLYWAX 500, POLYWAX 600, POLYWAX 655, and POLYWAX 725 polyethylene waxes from NuCera Solutions (Houston, Texas).

Useful microcrystalline waxes are commercially available under a variety of trade designations including, e.g., the MICROSERE series of trade designations from Alfa Chemicals (United Kingdom) including MICROSERE 5999A microcrystalline wax.

The total amount of wax present in the hot melt adhesive composition is at least 20 % by weight, at least 25 % by weight, at least 27 % by weight, from 20 % by weight to 35 % by weight, from 25 % by weight to 35 % by weight, or even from 25 % by weight to 30 % by weight. The hot melt adhesive composition preferably includes at least 20 % by weight, at least 25 % by weight, at least 27 % by weight, from 20 % by weight to 35 % by weight, from 25 % by weight to 35 % by weight, or even from 25 % by weight to 30 % by weight of a wax having a drop melting point from 80 °C to 105 °C.

Although the hot melt adhesive composition preferably is free of paraffin wax, it can optionally additionally include a paraffin wax. Useful commercially available paraffin waxes include, e.g., paraffin waxes available under the PARVAN series of trade designations from ExxonMobil Chemical Company (Houston, Texas) including, e.g., PARVAN 1580 and PARVAN 1520 paraffin waxes, and under the CALUMET series of trade designations from Calumet Specialty Products Partners, LP (Indianapolis, Indiana) including CALUMET FR-6513 paraffin wax. To the extent that a paraffin wax is present in the hot melt adhesive composition, the hot melt adhesive composition includes from 0 % to less than 15 % by weight, at least 1 % by weight, no greater than 10 % by weight, no greater than 5 % by weight, or even from 1 % by weight to 10 % by weight paraffin wax.

### TACKIFYING AGENT

The hot melt adhesive composition also includes a tackifying agent. Useful tackifying agents have a Tg of at least 40 °C, at least 60 °C, or even at least 80 °C, and a Ring and Ball softening point of less than 120 °C, no greater than 115 °C, no greater than 110 °C, no greater than 100 °C, at least 90 °C, or even from 90 °C to no greater than 100 °C. The tackifying agent preferably is a hydrogenated tackifying agent. Suitable hydrogenated tackifying agents include, e.g., aliphatic hydrocarbon resins, fully hydrogenated aliphatic hydrocarbon resins, cycloaliphatic hydrocarbon resins, fully hydrogenated cycloaliphatic hydrocarbon resins, aromatic modified aliphatic hydrocarbon resins, fully hydrogenated aromatic modified aliphatic hydrocarbon resins, and combinations thereof. Specific examples of useful aliphatic and cycloaliphatic petroleum hydrocarbon resins include, e.g., branched, unbranched, and cyclic C5 resins, C9 resins, and C10 resins, and combinations thereof.

Useful commercially available hydrogenated tackifying agents are available under a variety of trade designations including, e.g., the EASTOTAC series of trade designations from Eastman Chemical Company (Kingsport, Tennessee) including, e.g., EASTOTAC H-100R, EASTOTAC H-100W, and EASTOTAC H-100L, the ESCOREZ series of trade designations from ExxonMobil Chemical Company (Houston, Texas) including, e.g., ESCOREZ 1310LC, ESCOREZ 5400, ESCOREZ 5415, ESCOREZ 5600, ESCOREZ 5615, and ESCOREZ 5690, the ARKON series of trade designations from Arakawa Europe GmbH (Germany) including, e.g., ARKON P-100 hydrogenated hydrocarbon resin.

The total amount of tackifying agent present in the hot melt adhesive composition is at least 30 % by weight, at least 35 % by weight, at least 40 % by weight, no greater than 50 % by weight, no greater than 47 % by weight, from 30 % by weight to 50 % by weight, from 35 % by weight to 50 % by weight, or even from 40 % by weight to 50 % by weight.

Preferably the hot melt adhesive composition includes at least 20 % by weight, at least 25 % by weight, at least 30 % by weight, at least 35 % by weight, at least 40 % by weight, no greater than 50 % by weight, no greater than 47 % by weight, from 20 % by weight to 50 % by weight, from 35 % by weight to 50 % by weight, or even from 40 % by weight to 50 % by weight hydrogenated tackifying agent having a softening point less than 120 °C.

The hot melt adhesive composition optionally additionally includes a hydrogenated tackifying agent having a softening point of at least 120 °C in addition to the hydrogenated hydrocarbon tackifying agent having a softening point less than 120 °C. One example of a useful commercially available a hydrogenated tackifying agent having a softening point of at least 120 °C is available under the RESINALL trade designation from Resinall Corp. (Severn, North Carolina). To the extent that a hydrogenated tackifying agent having a softening point of at least 120 °C is present in the hot melt adhesive composition in addition to the hydrogenated hydrocarbon tackifying agent having a softening point less than 120 °C, the hot melt adhesive composition includes from 0 % by weight to no greater than 30 % by weight, at least 5 % by weight, at least 10 % by weight, at least 15 % by weight, no greater than 25 % by weight, no greater than 20 % by weight, from 1 % by weight to 25 % by weight, or even from 5 % by weight to 20 % by weight hydrogenated tackifying agent having a softening point of at least 120 °C.

The hot melt adhesive composition optionally additionally includes a non-hydrogenated tackifying agent in addition to a hydrogenated hydrocarbon tackifying agent. Examples of suitable non-hydrogenated tackifying agents include rosin-based tackifying agents, terpene-based tackifying agents, and combinations thereof. Useful rosin-based tackifying agents include rosin acids, rosin esters, wood rosin, tall oil rosin, gum rosin, distilled rosin, hydrogenated rosin, dimerized rosin, polymerized rosin, and combinations thereof. Examples of useful rosin esters include e.g., glycerol esters of pale wood rosin, glycerol esters of hydrogenated rosin, glycerol esters of polymerized rosin, pentaerythritol esters of natural and modified rosins including pentaerythritol esters of pale wood rosin, pentaerythritol esters of hydrogenated rosin, pentaerythritol esters of tall oil rosin, phenolic-modified pentaerythritol esters of rosin, and combinations thereof.

Useful commercially available rosin-based tackifying agents are available under a variety of trade designations including, e.g., the SYLVALITE series of trade designations from Arizona Chemical Company (Jacksonville, Florida) including, e.g., SYLVALITE RE-100L rosin ester, SYLVALITE 9100 rosin ester, KOMOTAC KA100L gum rosin pentaerythritol ester from Komo Pine Chemicals, Guangzhou Komo Chemical Co., Ltd. (China), the WESTREZ and ALTATAC series of trade designations from Ingevity Corp. (North Charleston, South Carolina) including, e.g., WESTREZ 5101P, WESTREZ 5295, ALTATAC 1000P, and ALTATAC 1000 rosin esters, the FORAL series of trade designations from Eastman (Kingsport, Tennessee) including, e.g., FORAL 105-E gum rosins and FORAL AX rosin acid, and the TECKROS series of trade designations from Teckrez Inc. (Fleming Island, Florida) including, e.g., TECKROS D85 and D95 rosin esters.

Examples of useful polyterpene resins include non-hydrogenated polyterpene resins, hydrogenated polyterpene resins, and copolymers and terpolymers of natural terpenes (e.g., styrene-terpene, alpha-methyl styrene-terpene and vinyl toluene-terpene), and combinations thereof. Polyterpene resins are commercially available under a variety of trade designations including, e.g., the SYLVARES series of trade designations from Kraton Corp. (Houston, Texas) including SYLVARES 6100 terpene resin, and under the DERCOLYTE series of trade designations from DRT Company (Dax, France) including, e.g., DERCOLYTE A115 terpene resin.

To the extent that a non-hydrogenated tackifying agent is present in the hot melt adhesive composition, the hot melt adhesive composition includes from 0 % by weight no greater than 25 % by weight, no greater than 20 % by weight, from 1 % by weight to 15 % by weight, or even from 1 % by weight to 10 % by weight non-hydrogenated tackifying agent.

### ADDITIONAL COMPONENTS

The hot melt adhesive composition optionally includes a variety of additional components including, e.g., antioxidants, stabilizers, adhesion promoters, ultraviolet light stabilizers, rheology modifiers, corrosion inhibitors, colorants (e.g., pigments and dyes), fillers, flame retardants, nucleating agents, plasticizers, and combinations thereof.

Useful antioxidants include, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof. Suitable antioxidants are commercially available under a variety of trade designations including, e.g., the IRGANOX series of trade designations including, e.g., IRGANOX 1010, IRGANOX 565, and IRGANOX 1076 hindered phenolic antioxidants, and IRGAFOS 168 phosphite antioxidant, all of which are available from BASF Corporation (Florham Park, New Jersey), and ETHYL 702 4,4'-methylene bis(2,6-di-tert-butylphenol). When present, the hot melt adhesive composition preferably includes from about 0.1 % by weight to about 2 % by weight antioxidant.

### USES

The hot melt adhesive composition can be applied to or incorporated in a variety of articles including, e.g., fibers, substrates made from fibers (e.g., virgin fibers, recycled fibers, synthetic polymer fibers (e.g., nylon, rayon, polyesters, acrylics, polypropylenes, polyethylene, polyvinyl chloride, polyurethane), cellulose fibers (e.g., natural cellulose fibers such as wood pulp), natural fibers (e.g., cotton, silk and wool), and glass fibers, and combinations thereof), release liners, porous substrates, cellulose substrates, sheets (e.g., paper, and fiber sheets), paper products, woven and nonwoven webs (e.g., webs made from fibers (e.g., yarn, thread, filaments, microfibers, blown fibers, and spun fibers), perforated films, and combinations thereof), tape backings, and combinations thereof.

The hot melt adhesive composition is useful for bonding a variety of substrates including, e.g., cardboard, coated cardboard, paperboard, fiber board, virgin and recycled kraft, high and low density kraft, chipboard, treated and coated kraft and chipboard, and corrugated versions of the same, clay coated chipboard carton stock, composites, leather, fibers and substrates made from fibers (e.g., virgin fibers, recycled fibers, synthetic polymer fibers, cellulose fibers, and combinations thereof), release liners, porous substrates (e.g., woven webs, nonwoven webs, and perforated films), cellulose substrates, sheets (e.g., paper, and fiber sheets), paper products, tape backings, and combinations thereof.

The hot melt adhesive composition is useful for bonding a first substrate to a second substrate in a variety of applications and constructions including, e.g., packaging, bags, boxes, cartons, cases, trays, multi-wall bags, articles that include attachments (e.g., straws attached to drink boxes), ream wrap, cigarettes (e.g., plug wrap), filters (e.g., pleated filters and filter frames), bookbinding, paper products including, e.g., paper towels (e.g., multiple use towels), toilet paper, tissues (e.g., facial tissue), wipes, and combinations thereof.

The hot melt adhesive composition can be applied to a substrate in any useful form including, e.g., as a coating (e.g., a continuous coatings and discontinuous coatings (e.g., random, pattern, and array)), as a bead, as a film (e.g., a continuous films and discontinuous films), and combinations thereof, using any suitable application method including, e.g., slot coating, spray coating (e.g., spiral spray, random spraying, and random fiberization (e.g., melt blowing), foaming, extrusion (e.g., applying a bead, fine line extrusion, single screw extrusion, and twin screw extrusion), wheel application, noncontact coating, contacting coating (e.g., direct coating), gravure, engraved roller, roll coating, transfer coating, screen printing, flexographic, "on demand" application methods, and combinations thereof.

In on demand hot melt application systems (which are also referred to as "tank free" and "tankless" systems), hot melt compositions are fed in a solid state (e.g., pellets), to a relatively small heating vessel (relative to traditional hot melt applications systems that include a pot) where the hot melt composition is melted and, typically shortly thereafter, the molten liquid is applied to a substrate. In on demand systems, a relatively large quantity of hot melt composition typically does not remain in a molten state for an extended period of time. In many existing on demand systems, the volume of molten hot melt composition is no greater than about 1 liter, or even no greater than about 500 milliliters, and the hot melt composition is maintained in a molten state for a relatively brief period of time, including, e.g., less than two hours, less than one hour, or even less than 30 minutes. Suitable on demand hot melt adhesive application systems include, e.g., InvisiPac Tank-Free Hot Melt Delivery System from Graco Minnesota Inc. (Minneapolis, Minnesota) and the Freedom Hot Melt Dispensing System from Nordson Corporation (Westlake, Ohio). On demand hot melt adhesive application systems are described in U.S. Patent Publication Nos. 2013-0105039, 2013-0112709, 2013-0112279, and 2014-0042182, and U.S. Patent No. 8,201,717, and incorporated herein.

The invention will now be described by way of the following examples. All parts, ratios, percentages, and amounts stated in the Examples are by weight unless otherwise specified.

### EXAMPLES

### Test Procedures

Test procedures used in the examples include the following. All ratios and percentages are% by weight unless otherwise indicated. The procedures are conducted at room temperature (i.e., an ambient temperature of from about 20 °C to about 25 °C) unless otherwise specified.

### Drop Melting Point Test Method

Drop melting point is determined according to ASTM D3954-15 entitled, "Standard Test Method for Drop Point of Waxes."

### Viscosity Test Method

Viscosity is determined at the specified temperature in accordance with ASTM D-3236 entitled, "Standard Test Method for Apparent viscosity of Hot Melt Adhesives and Coating Materials," (October 31, 1988), using a Brookfield viscometer (e.g., a Brookfield RVDV-II+), a Brookfield Thermosel heated sample chamber, and a number 27 spindle. The results are reported in centipoise (cP).

### Percentage Fiber Tear Test Method

The percentage fiber tear is the percentage of fiber that covers the area of the adhesive after two substrates that have been previously bonded together through the adhesive are separated by force. The percentage of fiber tear using WESTROCK 44 is determined as follows. A bead of adhesive composition measuring 15.24 cm (6 inch) x 0.24 cm (0.094 inch) is applied to a first substrate of WESTROCK 44-pound edge crush C flute corrugated linear board with greater than 100 % recycled fibers using a ROCKTENN bond simulator at an application temperature of 107 °C. Two seconds after the bead of adhesive is applied to the first substrate, the bead of adhesive is contacted with a second substrate of WESTROCK 44-pound edge crush C flute corrugated linear board with greater than 100 % recycled fibers, which is pressed against both the adhesive and the first substrate with a pressure of 0.21 MPa (30 pounds per square inch (psi)) for a period of 2 seconds. The resulting construction is then conditioned at room temperature for at least 4 hours and then conditioned at the specified test temperature for at least 12 hours. The substrates of the construction are then separated from one another at the test temperature (e.g., immediately after removing the sample from the conditioning chamber) by pulling the two substrates apart from one another by hand. The surface of the adhesive composition is observed and the percentage of the surface area of the adhesive composition that is covered by fibers is determined and recorded. A minimum of five samples are prepared and tested for each hot melt adhesive composition. The results are reported in units of % fiber tear.

### Peel Adhesion Failure Temperature to Kraft Test Method

Peel adhesion failure temperature (PAFT) is determined as follows. A first sheet of kraft paper is prepared by affixing two release liners on the first sheet of kraft. The release liners are separated from each other by a distance of 2.54 cm to form a 2.54 cm channel therebetween, which will accommodate the adhesive composition that is subsequently applied. A small amount of adhesive composition is applied to the channel near the top edge of the first sheet. A second sheet of kraft paper is placed on top of the adhesive composition and the first sheet of kraft paper. A draw down bar is pressed against the top edge of the second sheet, the adhesive composition, and the first sheet, and then drawn down the length of the second sheet from the top edge to the bottom edge of the second sheet of kraft paper to bond the first sheet of kraft paper to the second sheet of kraft paper through the adhesive composition. The draw down bar has a gap, which defines the thickness of the adhesive composition in the channel as the bar is drawn down the length of the sheets of kraft paper. The resulting coated adhesive composition is 2.54 cm (one inch) wide and from 0.2 mm to 0.3 mm (from 8 mils to 12 mils) thick. The sample is formed in such a way that a bond area of 6.45 cm² can be tested in the failure mode. The resulting sample is conditioned at room temperature for at least 12 hours. The sample is positioned in an oven in the peel mode such that the top edge of the first sheet of kraft paper is held in position in the oven by a clamp, and a 100-gram weight is attached to the top edge of the second sheet of kraft paper. The ambient temperature in the oven is ramped from a starting temperature of 25 °C to an ending temperature of 140 °C at a rate of 25 °C/hour. The oven automatically records the temperature at which the sample fails. A minimum of five samples are run for each sample composition. The average value of the five samples is reported as the PAFT in degrees Celsius.

### Shear Adhesion Failure Temperature to Kraft Test Method

Shear adhesion failure temperature (SAFT) is determined as follows. A first sheet of kraft paper is prepared by affixing two release liners on the first sheet of kraft. The release liners are separated from each other by a distance of 2.54 cm to form a 2.54 cm channel therebetween, which will accommodate the adhesive composition that is subsequently applied. A small amount of adhesive composition is applied to the channel near the top edge of the first sheet. A second sheet of kraft paper is placed on top of the adhesive composition and the first sheet of kraft paper. A draw down bar is pressed against the top edge of the second sheet, the adhesive composition, and the first sheet, and then drawn down the length of the second sheet from the top edge to the bottom edge of the second sheet of kraft paper to bond the first sheet of kraft paper to the second sheet of kraft paper through the adhesive composition. The draw down bar has a gap, which defines the thickness of the adhesive composition in the channel as the bar is drawn down the length of the sheets of kraft paper. The resulting coated adhesive composition is 2.54 cm (one inch) wide and from 0.2 mm to 0.3 mm (from 8 mils to 12 mils) thick. The sample is formed in such a way that a bond area of 6.45 cm² can be tested in the failure mode. The resulting sample is conditioned at room temperature for at least 12 hours. The resulting sample is then positioned in an oven in the shear mode such that the top edge of the first sheet of kraft paper is held in position in the oven by a clamp, and a 500 gram weight is suspended from each sample in the shear mode, i.e., the weight is attached to the bottom edge of the second sheet of kraft paper. The ambient temperature in the oven is ramped from a starting temperature of 25 °C to an ending temperature of 160 °C at a rate of 25 °C/hour. The oven automatically records the temperature at which the sample fails. A minimum of three samples are run for each sample composition. The average value of the three samples is reported as the SAFT in degrees Celsius.

### Set Time Test Method

Set time is determined according to the following test method. A bead of adhesive composition measuring 10.00 cm by 0.24 cm is applied to a first substrate of WESTROCK 44-pound edge crush test C flute corrugated linear board with 100 % recycled fibers using a MEC ASM-15N Hot Melt Bond Simulator at 107 °C. Two seconds after the bead of adhesive is applied to the first substrate, the bead of adhesive is contacted with the second substrate of WESTROCK 44-pound edge crush test C flute corrugated linear board with 100 % recycled fibers, which is then pressed against the first substrate with a pressure of 0.21 MPa and for a period of time (referred to herein as the compression time) such that the bond area is 5.00 cm by 0.24 cm. The Bond Simulator timer is started when the substrates are compressed. After an initial compression time of 0.5 seconds, the instrument separates the two substrates by pulling on the second substrate in the Z direction and holding the first substrate in a fixed position and the force required to separate the substrates and the amount of fiber tear present on the adhesive composition is measured. Samples are run in triplicate at each compression time. If the three samples fail to exhibit greater than 50 % Fiber Tear for each sample, the compression time is increased by 0.1 second and the test method is repeated until greater than 50 % fiber tear is noted for all three samples. The 50 % fiber tear set time is recorded as the compression time at which the three samples achieve greater than 50 % fiber tear immediately upon separation. The set time is reported in seconds.

### Gardner Color Determination Method

A sample is tested (in the molten state) to determine Gardner color by comparing the color of the sample against the Gardner Color Standards set forth in ASTM D-1544. The comparison is made using a Gardner Delta Comparator equipped with an Illuminator (e.g., an illuminator available from Pacific Scientific (Bethesda, Maryland)). The result is reported as the number corresponding to the Gardner Color Standard.

### Softening Point Test Method

Softening point of the hot melt adhesive composition is determined according to ASTM D3461-97 entitled, "Standard Test Method for Softening Point of Asphalt and Pitch," using a DP70 Dropping Point System from Mettler Toledo, with the exception that the automatic heating cycle rate was 1.67 °C/min instead of 2 °C/min.

### EXAMPLES 1-27

The components of the hot melt adhesive compositions of Examples 1-27 were combined at room temperature in the amounts set forth in Tables 1-6 (in percent by weight), heated to a temperature sufficient to melt the components (i.e., from 107 °C to 120 °C), and then mixed at a temperature of from 120 °C to 140 °C to form the adhesive composition. The resulting hot melt adhesive compositions were then tested according to the Viscosity, Set Time, % Fiber Tear, SAFT, PAFT, Gardner Color, and Softening Point test methods, where indicated. The results are set forth below in Tables 1-6.

**Table 1**

| | 1 | 2 | 3 | 4 | 5 | 6 |
|---|---|---|---|---|---|---|
| AFFINITY GA 1900 | 19.5 | 10.0 | 19.5 | 19.5 | 10.0 | 14.5 |
| LICOCENE 3602 | 0 | 0 | 0 | 10.0 | 19.5 | 15.0 |
| LICOCENE 2602 | 10.0 | 19.5 | 10.0 | 0 | 0 | 0 |
| SASOL C-80 | 30.0 | 30.0 | 30.0 | 30.0 | 30.0 | 30.0 |
| EASTOTAC H100L | 0 | 0 | 40.0 | 40.0 | 40.0 | 40.0 |
| ESCOREZ 5400 | 40.0 | 40.0 | 0 | 0 | 0 | 0 |
| IRGANOX 1010 | 0.5 | 0.5 | 0.5 | 0.5 | 0.5 | 0.5 |
| Total | 100.0 | 100.0 | 100.0 | 100.0 | 100.0 | 100.0 |
| Viscosity @ 107 °C | 1360 | 1330 | 1337 | 1570 | 1570 | 1523 |
| Viscosity @ 121 °C | 843 | 803 | 825 | 910 | 945 | 928 |
| Initial Gardner Color | 1 | 1 | 2 | 1 | 1 | 1 |
| Set Time (seconds) | 0.3 | 0.2 | 0.1 | 0.3 | 0.3 | 0.3 |

| Fiber Tear (%) | | | | | | |
|---|---|---|---|---|---|---|
| at -29 °C | 93 | 59 | 97 | 87 | 46 | 25 |
| at -18 °C | 84 | 44 | 86 | 85 | 55 | 27 |
| at 4 °C | 95 | 61 | 91 | 81 | 49 | 47 |
| at RT | 99 | 91 | 98 | 87 | 91 | 68 |
| at 38 °C | 100 | 94 | 98 | 89 | 100 | 91 |
| at 49 °C | 58 | 97 | 85 | 85 | 97 | 97 |
| at 54 °C | 50 | 79 | 34 | 69 | 86 | 57 |
| SAFT (°C) | 74 | 73 | 73 | 74 | 75 | 74 |
| PAFT (°C) | 46 | 48 | 49 | 46 | 54 | 51 |

| | | | | | | |
|---|---|---|---|---|---|---|
| AFFINITY GA 1900 = ethylene/octene copolymer (The Dow Chemical Company, Midland, Michigan) LICOCENE 3602 = metallocene-catalyzed propylene/ethylene copolymer having a viscosity of 9300 cP at 170 °C and a softening point of from 107 °C to 115 °C, all as reported by the manufacturer (Clariant Int'l Ltd., Switzerland) LICOCENE 2602 = polypropylene having a viscosity of 6300 cP at 170 °C and a density of 0.89 g/cm³, all as reported by the manufacturer (Clariant Int'l Ltd., Switzerland) SASOL C80 = Fischer-Tropsch wax (Sasol Performance Chemicals, Germany) EASTOTAC H100L = hydrogenated hydrocarbon resin having a softening point of 101 °C, as reported by the manufacturer (Eastman Chemical Company, Kingsport, Tennessee) ESCOREZ 5400 = cycloaliphatic hydrocarbon resin having a softening point of 103.4 °C, as reported by the manufacturer (ExxonMobil Chemical Company, Houston, Texas) IRGANOX 1010 = antioxidant RT= room temperature | | | | | | |

**Table 2**

| | 7 | 8 | 9 | 10 | 11 |
|---|---|---|---|---|---|
| AFFINITY GA 1900 | 19.5 | 14.5 | 19.5 | 14.5 | 14.5 |
| LICOCENE 3602 | 10.0 | 10.0 | 5.0 | 10.0 | 0 |
| VISTAMAXX 8880 | 0 | 0 | 0 | 0 | 10.0 |
| SASOL C-80 | 25.0 | 30.0 | 30.0 | 30.0 | 30.0 |
| EASTOTAC H100L | 45.0 | 45.0 | 45.0 | 0 | 0 |
| ESCOREZ 5600 | 0 | 0 | 0 | 45.0 | 45.0 |
| IRGANOX 1010 | 0.5 | 0.5 | 0.5 | 0.5 | 0.5 |
| Total | 100.0 | 100.0 | 100.0 | 100.0 | 100.0 |
| Viscosity @ 107 °C | 1967 | 1080 | 1035 | 1092 | 770 |
| Viscosity @ 121 °C | 1168 | 655 | 640 | 663 | 470 |
| Initial Gardner Color | 1 | 1 | 1 | 1 | 1 |
| Set time (seconds) | 0.1 | 0.1 | 0.1 | 0.1 | 0.1 |

| Fiber Tear (%) | | | | | |
|---|---|---|---|---|---|
| at -29 °C | 98 | 35 | 83 | 59 | 27 |
| at -18 °C | 82 | 35 | 78 | NT | NT |
| at 4 °C | 85 | 56 | 94 | 74 | 57 |
| at RT | 97 | 98 | 97 | 84 | 76 |
| at 38 °C | 99 | 100 | 99 | NT | NT |
| at 49 °C | 100 | 99 | 100 | 94 | 90 |
| at 54 °C | 63 | 76 | 80 | 86 | 77 |
| at 60 °C | NT | NT | NT | 71 | 52 |
| SAFT (°C) | 73 | 74 | 73 | 76 | 74 |
| PAFT (°C) | 52 | 54 | 49 | 54 | 52 |
| Softening Point (°C) | NT | NT | NT | 85 | 84 |

| | | | | | |
|---|---|---|---|---|---|
| VISTAMAXX 8880 = metallocene-catalyzed propylene/ethylene copolymer having a density of 0.88 g/cm³, a viscosity of 1200 cP at 190 °C, and a Tg of -22 °C, all as reported by the manufacturer (ExxonMobil Chemical Company, Houston, Texas) ESCOREZ 5600 = aromatic modified cycloaliphatic hydrocarbon resin having a softening point of 102.5 °C, as reported by the manufacturer (ExxonMobil) NT= not tested | | | | | |

**Table 3**

| | 12 | 13 | 14 | 15 | 16 |
|---|---|---|---|---|---|
| AFFINITY GA 1900 | 19.5 | 19.5 | 19.5 | 24.5 | 24.5 |
| LICOCENE 3602 | 10.0 | 0 | 0 | 0 | 0 |
| VISTAMAXX 8880 | 0 | 10.0 | 10.0 | 0 | 0 |
| SASOL C-80 | 30.0 | 30.0 | 25.0 | 30.0 | 30.0 |
| ESCOREZ 5600 | 40.0 | 40.0 | 45.0 | 45.0 | 22.0 |
| RESINALL R1030 | 0 | 0 | 0 | 0 | 23.0 |
| IRGANOX 1010 | 0.5 | 0.5 | 0.5 | 0.5 | 0.5 |
| Total | 100.0 | 100.0 | 100.0 | 100.0 | 100.0 |
| Viscosity @ 107 °C | 1490 | 1082 | 1462 | 1030 | 1138 |
| Viscosity @ 121 °C | 913 | 665 | 865 | 633 | 715 |
| Initial Gardner Color | 1 | 1 | 1 | 1 | 1 |
| Set time (seconds) | 0.3 | 0.1 | 0.1 | 0.1 | 0.1 |

| Fiber Tear (%) | | | | | |
|---|---|---|---|---|---|
| at -29 °C | 40 | 29 | 44 | 81 | 52 |
| at 4 °C | 70 | 76 | 89 | 79 | 66 |
| at RT | 89 | 92 | 96 | 93 | 100 |
| at 49 °C | 63 | 64 | 93 | 76 | 87 |
| at 54 °C | 67 | 25 | 35 | 71 | 56 |
| at 60 °C | 30 | 27 | 25 | 26 | 51 |
| SAFT (°C) | 75 | 74 | 73 | 74 | 75 |
| PAFT (°C) | 50 | 47 | 54 | 47 | 48 |
| Softening Point (°C) | 86 | 84 | 84 | NT | 85 |

| | | | | | |
|---|---|---|---|---|---|
| RESINALL R1030 = hydrogenated cycloaliphatic hydrocarbon resin, Ring and Ball softening point of 130 °C, as reported by the manufacturer (Resinall Corp., Severn, North Carolina) | | | | | |

**Table 4**

| | 17 | 18 | 19 | 20 |
|---|---|---|---|---|
| AFFINITY GA 1900 | 14.5 | 14.5 | 14.5 | 14.5 |
| LICOCENE 3602 | 0 | 10.0 | 0 | 0 |
| L-MODU S400 | 0 | 0 | 0 | 10.0 |
| L-MODU S410 | 10.0 | 0 | 0 | 0 |
| LICOCENE 2502 | 0 | 0 | 10.0 | 0 |
| SASOL C-80 | 30.0 | 0 | 30.0 | 30.0 |
| MICROSERE 5999A | 0 | 30.0 | 0 | 0 |
| ESCOREZ 5600 | 45.0 | 45.0 | 45.0 | 45.0 |
| IRGANOX 1010 | 0.5 | 0.5 | 0.5 | 0.5 |
| Total | 100 | 100 | 100 | 100 |
| Viscosity @ 107 °C | 1153 | 1538 | 798 | 1190 |
| Viscosity @ 121 °C | 698 | 898 | 483 | 708 |
| Initial Gardner Color | 1 | 3 | 1 | 1 |
| Set time (seconds) | 0.1 | 0.3 | 0.1 | 0.1 |

| Fiber Tear (%) | | | | |
|---|---|---|---|---|
| at -29 °C | 35 | 24 | 2 | 10 |
| at 4 °C | 79 | 62 | 24 | 68 |
| at RT | 73 | 80 | 67 | 64 |
| at 49 °C | 77 | 79 | 95 | 65 |
| at 54 °C | 47 | 37 | 60 | 51 |
| at 60 °C | 32 | 28 | 54 | 38 |
| SAFT (°C) | 74 | 73 | 73 | 74 |
| PAFT (°C) | 51 | 51 | 57 | 56 |
| Softening Point (°C) | NT | 89 | 86 | 87 |

| | | | | |
|---|---|---|---|---|
| L-MODU S400 = polypropylene homopolymer having a viscosity of 8500 cP at 190 °C, a density of 0.87 g/cm³, and a softening point of 93 °C, all as reported by the manufacturer (Idemitsu Kosan Co., Ltd., Japan) L-MODU S410 = polypropylene homopolymer having a viscosity of 8500 cP at 190 °C, a density of 0.87 g/cm³, and a softening point of 89 °C, all as reported by the manufacturer (Idemitsu) LICOCENE 2502 = metallocene-catalyzed propylene-ethylene copolymer having a viscosity of 2000 cP at 170 °C, a density of 0.87 g/cm³ and a softening point of 103 °C, all as reported by the manufacturer (Clariant Int'l Ltd., Muttenz, Switzerland) MICROSERE 5999A = microcrystalline wax (Alfa Chemicals LLC, England, UK) | | | | |

**Table 5**

| | 21 | 22 | 23 |
|---|---|---|---|
| AFFINITY GA 1900 | 19.5 | 19.5 | 14.5 |
| LICOCENE 2502 | 10.0 | 10.0 | 15.0 |
| SASOL C-80 | 25.0 | 15.0 | 25.0 |
| POLYWAX 725 | 0 | 10.0 | 0 |
| ESCOREZ 5600 | 45.0 | 45.0 | 45.0 |
| IRGANOX 1010 | 0.5 | 0.5 | 0.5 |
| Total | 100.0 | 100.0 | 100.0 |
| Viscosity @ 107 °C | 1480 | 1608 | 1317 |
| Viscosity @ 121 °C | 883 | 955 | 773 |
| Initial Gardner Color | 1 | 1 | 1 |
| Set time (seconds) | 0.1 | 0.1 | 0.1 |

| Fiber Tear (%) | | | |
|---|---|---|---|
| at -29 °C | 41 | 48 | 9 |
| at 4 °C | 74 | 80 | 67 |
| at RT | 85 | 96 | 94 |
| at 49 °C | 66 | 72 | 88 |
| at 54 °C | 40 | 43 | 64 |
| at 60 °C | 35 | 14 | 45 |
| SAFT (°C) | 73 | 78 | 73 |
| PAFT (°C) | 52 | 58 | 55 |
| Softening Point (°C) | 86 | 96 | 86 |

| | | | |
|---|---|---|---|
| POLYWAX 725 = polyethylene wax (NuCera Solutions, Houston, Texas). | | | |

**Table 6**

| | 24 | 25 | 26 | 27 |
|---|---|---|---|---|
| AFFINITY GA 1900 | 14.5 | 14.5 | 14.5 | 14.5 |
| LICOCENE 3602 | 10.0 | 10.0 | 10.0 | 10.0 |
| SASOL C-80 | 30.0 | 30.0 | 30.0 | 30.0 |
| ESCOREZ 5600 | 40.0 | 35.0 | 30.0 | 25.0 |
| RESINALL R1030 | 5.0 | 10.0 | 15.0 | 20.0 |
| IRGANOX 1010 | 0.5 | 0.5 | 0.5 | 0.5 |
| Total | 100 | 100 | 100 | 100 |
| Viscosity @ 107 °C | 1135 | 1150 | 1185 | 1205 |
| Viscosity @ 121 °C | 683 | 690 | 705 | 718 |
| Initial Gardner Color | 1 | 1 | 1 | 1 |
| Set time (seconds) | 0.1 | 0.1 | 0.1 | 0.1 |

| Fiber Tear (%) | | | | |
|---|---|---|---|---|
| at -29 °C | 18 | 30 | 3 | 4 |
| at 4 °C | 46 | 33 | 13 | 36 |
| at RT | 44 | 49 | 30 | 38 |
| at 49 °C | 82 | 94 | 70 | 85 |
| at 54 °C | 65 | 84 | 66 | 70 |
| at 60 °C | 49 | 66 | 48 | 58 |
| SAFT (°C) | 74 | 74 | 74 | 74 |
| PAFT (°C) | 53 | 58 | 56 | 58 |
| Softening Point (°C) | 85 | 85 | 84 | 85 |

## Claims

1. A hot melt adhesive composition comprising:
less than 35 % by weight total polymer content, the total polymer content comprising
from 10 % by weight to 30 % by weight, based on the weight of the hot melt adhesive composition, ethylene/alpha-olefin copolymer, wherein the ethylene/alpha-olefin copolymer includes greater than 50 % by weight ethylene,
from 4 % by weight to 20 % by weight, based on the weight of the hot melt adhesive composition, propylene polymer, wherein the propylene polymer includes greater than 50 % by weight propylene and exhibits a heat of fusion of from 5 J/g to 70 J/g, and
no greater than 5 % by weight polymer other than the ethylene/alpha-olefin copolymer and the propylene polymer,
the amount of ethylene/alpha-olefin copolymer in the hot melt adhesive composition being greater than the amount propylene polymer in the hot melt adhesive composition;
from 20 % by weight to 35 % by weight of a wax having a drop melting point, determined according to ASTM D3954-15, of no greater than 105 °C, and
at least 20 % by weight of a tackifying agent having a softening point, determined according to ASTM D3461-97, of less than 120 °C,
the composition exhibiting a viscosity of no greater than 2000 mPa·s (no greater than 2000 centipoise (cP)) at 107 °C.

2. A hot melt adhesive composition comprising:
less than 35 % by weight total polymer content, the total polymer content consisting of polymer selected from the group consisting of
ethylene/alpha-olefin copolymer, wherein the ethylene/alpha-olefin copolymer includes greater than 50 % by weight ethylene, and
a combination of ethylene/alpha-olefin copolymer, wherein the ethylene/alpha-olefin copolymer includes greater than 50 % by weight ethylene, and propylene polymer, wherein the propylene polymer includes greater than 50 % by weight propylene and exhibits a heat of fusion of from 5 J/g to 70 J/g;
from 20 % by weight to 50 % by weight of a tackifying agent having a softening point, determined according to ASTM D3461-97, of less than 120 °C; and
from 20 % by weight to 35 % by weight of a wax having a drop melting point, determined according to ASTM D3954-15, of no greater than 105 °C,
the hot melt adhesive composition
exhibiting a viscosity no greater than 1200 mPa·s (no greater than 1200 cP) at 107 °C and a peel adhesion failure temperature (PAFT), determined as defined in the description, of greater than 45 °C, and
being free of paraffin wax.

3. The hot melt adhesive composition of claim 1, wherein the composition exhibits a viscosity of no greater than 1800 mPa·s (no greater than 1800 cP) at 107 °C, no greater than 1500 mPa·s (no greater than 1500 cP) at 107 °C, or no greater than 1200 mPa·s (no greater than 1200 cP) at 107 °C.

4. The hot melt adhesive composition of any one of claims 1-3, wherein the composition exhibits a softening point of less than 99 °C.

5. The hot melt adhesive composition of any one of claims 1-3, wherein the composition exhibits a softening point of no greater than 97 °C.

6. The hot melt adhesive composition of any one of claims 1-5, wherein the tackifying agent has a softening point of no greater than 115 °C.

7. The hot melt adhesive composition of any one of claims 1-5, wherein the tackifying agent has a softening point of no greater than 110 °C.

8. The hot melt adhesive composition of any one of claims 2 or 4 to 7, wherein the amount of ethylene/alpha olefin copolymer in the composition is greater than the amount of propylene polymer in the composition.

9. The hot melt adhesive composition of any one of claims 1-8, wherein the propylene polymer is a single-site catalyzed propylene polymer and exhibits a density of no greater than 0.90 g/cm³.

10. The hot melt adhesive composition of any one of claims 1-9, wherein
the propylene polymer is a single-site catalyzed polymer that exhibits a density of no greater than 0.90 g/cm³ and a viscosity of no greater than 10,000 mPa·s (no greater than 10,000 cP) at 190 °C, and
the ethylene/alpha olefin copolymer is a single-site catalyzed polymer that exhibits a density of no greater than 0.90 g/cm³ and a viscosity of no greater than 9000 mPa·s (no greater than 9000 cP) at 190 °C.

11. The hot melt adhesive composition of any one of claims 1 and 3-10, wherein the composition comprises from 20 % by weight to 50 % by weight of the tackifying agent having a softening point less than 120 °C.

12. The hot melt adhesive composition of any one of claims 1-11, wherein the composition exhibits a fiber tearing bond at 4 °C.

13. The hot melt adhesive composition of any one of claims 1-12, wherein the composition exhibits a PAFT, determined as defined in the description, of at least 45 °C, and wherein *preferably* the composition exhibits a PAFT, determined as defined in the description, of at least 49 °C.

14. The hot melt adhesive composition of any one of claims 1-13 further comprising a tackifying agent having a softening point of at least 120 °C, the amount of tackifying agent having a softening point less than 120 °C being greater than the amount of tackifying agent having a softening point of at least 120 °C.

15. An article comprising:
a first substrate;
a second substrate; and
the hot melt adhesive composition of any one of claims 1-14, the first substrate being adhered to the second substrate through the adhesive composition.

## Patentansprüche

1. Schmelzklebstoffzusammensetzung, umfassend:
weniger als 35 Gew.-% Gesamtpolymergehalt, wobei der Gesamtpolymergehalt Folgendes umfasst:
von 10 Gew.-% bis 30 Gew.-%, bezogen auf das Gewicht der Schmelzklebstoffzusammensetzung, Ethylen/alpha-Olefin-Copolymer, wobei das Ethylen/alpha-Olefin-Copolymer mehr als 50 Gew.-% Ethylen enthält,
von 4 Gew.-% bis 20 Gew.-%, bezogen auf das Gewicht der Schmelzklebstoffzusammensetzung, Propylenpolymer, wobei das Propylenpolymer mehr als 50 Gew.-% Propylen enthält und eine Schmelzwärme von 5 J/g bis 70 J/g aufweist, und
höchstens 5 Gew.-% Polymer, das von dem Ethylen/alpha-Olefin-Copolymer und dem Propylenpolymer verschieden ist,
wobei die Menge an Ethylen/alpha-Olefin-Copolymer in der Schmelzklebstoffzusammensetzung größer ist als die Menge an Propylenpolymer in der Schmelzklebstoffzusammensetzung;
von 20 Gew.-% bis 35 Gew.-% eines Wachses mit einem Tropfschmelzpunkt, bestimmt gemäß ASTM D3954-15, von höchstens 105 °C, und
mindestens 20 Gew.-% eines Klebrigmachers mit einem Erweichungspunkt, bestimmt gemäß ASTM D3461-97, von weniger als 120 °C,
wobei die Zusammensetzung eine Viskosität von höchstens 2000 mPa·s (höchstens 2000 Centipoise (cP)) bei 107 °C aufweist.

2. Schmelzklebstoffzusammensetzung, umfassend:
weniger als 35 Gew.-% Gesamtpolymergehalt, wobei der Gesamtpolymergehalt aus Polymer besteht, das ausgewählt ist aus der Gruppe bestehend aus
Ethylen/alpha-Olefin-Copolymer, wobei das Ethylen/alpha-Olefin-Copolymer mehr als 50 Gew.-% Ethylen enthält, und
einer Kombination aus Ethylen/alpha-Olefin-Copolymer, wobei das Ethylen/alpha-Olefin-Copolymer mehr als 50 Gew.-% Ethylen enthält, und Propylenpolymer, wobei das Propylenpolymer mehr als 50 Gew.-% Propylen enthält und eine Schmelzwärme von 5 J/g bis 70 J/g aufweist;
von 20 Gew.-% bis 50 Gew.-% eines Klebrigmachers mit einem Erweichungspunkt, bestimmt gemäß ASTM D3461-97, von weniger als 120 °C; und
von 20 Gew.-% bis 35 Gew.-% eines Wachses mit einem Tropfschmelzpunkt, bestimmt gemäß ASTM D3954-15, von höchstens 105 °C,
wobei die Schmelzklebstoffzusammensetzung
eine Viskosität von höchstens 1200 mPa·s (höchstens 1200 cP) bei 107 °C und eine Schälhaftungsversagenstemperatur (PAFT), bestimmt wie in der Beschreibung definiert, von mehr als 45 °C aufweist und
frei von Paraffinwachs ist.

3. Schmelzklebstoffzusammensetzung nach Anspruch 1, wobei die Zusammensetzung eine Viskosität von höchstens 1800 mPa·s (höchstens 1800 cP) bei 107 °C, höchstens 1500 mPa·s (höchstens 1500 cP) bei 107 °C oder höchstens 1200 mPa·s (höchstens 1200 cP) bei 107 °C aufweist.

4. Schmelzklebstoffzusammensetzung nach einem der Ansprüche 1 bis 3, wobei die Zusammensetzung einen Erweichungspunkt von weniger als 99 °C aufweist.

5. Schmelzklebstoffzusammensetzung nach einem der Ansprüche 1 bis 3, wobei die Zusammensetzung einen Erweichungspunkt von höchstens 97 °C aufweist.

6. Schmelzklebstoffzusammensetzung nach einem der Ansprüche 1 bis 5, wobei der Klebrigmacher einen Erweichungspunkt von höchstens 115 °C besitzt.

7. Schmelzklebstoffzusammensetzung nach einem der Ansprüche 1 bis 5, wobei der Klebrigmacher einen Erweichungspunkt von höchstens 110 °C besitzt.

8. Schmelzklebstoffzusammensetzung nach einem der Ansprüche 2 oder 4 bis 7, wobei die Menge an Ethylen/alpha-Olefin-Copolymer in der Zusammensetzung größer ist als die Menge an Propylenpolymer in der Zusammensetzung.

9. Schmelzklebstoffzusammensetzung nach einem der Ansprüche 1 bis 8, wobei das Propylenpolymer ein Single-Site-katalysiertes Propylenpolymer ist und eine Dichte von höchstens 0,90 g/cm³ aufweist.

10. Schmelzklebstoffzusammensetzung nach einem der Ansprüche 1 bis 9, wobei
das Propylenpolymer ein Single-Site-katalysiertes Polymer ist, das eine Dichte von höchstens 0,90 g/cm³ und eine Viskosität von höchstens 10.000 mPa·s (höchstens 10.000 cP) bei 190 °C aufweist, und
das Ethylen/alpha-Olefin-Copolymer ein Single-Site-katalysiertes Polymer ist, das eine Dichte von höchstens 0,90 g/cm³ und eine Viskosität von höchstens 9000 mPa·s (höchstens 9000 cP) bei 190 °C aufweist.

11. Schmelzklebstoffzusammensetzung nach einem der Ansprüche 1 und 3 bis 10, wobei die Zusammensetzung von 20 Gew.-% bis 50 Gew.-% des Klebrigmachers mit einem Erweichungspunkt von weniger als 120 °C umfasst.

12. Schmelzklebstoffzusammensetzung nach einem der Ansprüche 1 bis 11, wobei die Zusammensetzung eine faserreißende Verklebung bei 4 °C aufweist.

13. Schmelzklebstoffzusammensetzung nach einem der Ansprüche 1 bis 12, wobei die Zusammensetzung eine PAFT, bestimmt wie in der Beschreibung definiert, von mindestens 45 °C aufweist, und wobei die Zusammensetzung vorzugsweise eine PAFT, bestimmt wie in der Beschreibung definiert, von mindestens 49 °C aufweist.

14. Schmelzklebstoffzusammensetzung nach einem der Ansprüche 1 bis 13, ferner umfassend einen Klebrigmacher mit einem Erweichungspunkt von mindestens 120 °C, wobei die Menge an Klebrigmacher mit einem Erweichungspunkt von weniger als 120 °C größer ist als die Menge an Klebrigmacher mit einem Erweichungspunkt von mindestens 120 °C.

15. Gegenstand, umfassend:
ein erstes Substrat;
ein zweites Substrat; und
die Schmelzklebstoffzusammensetzung nach einem der Ansprüche 1 bis 14, wobei das erste Substrat über die Klebstoffzusammensetzung an dem zweiten Substrat haftet.

## Revendications

1. Une composition adhésive thermofusible comprenant :
moins de 35 % en poids de teneur totale en polymère, la teneur totale en polymère comprenant
de 10 % en poids à 30 % en poids, sur la base du poids de la composition adhésive thermofusible, de copolymère d'éthylène/alpha-oléfine, dans lequel le copolymère d'éthylène/alpha-oléfine comprend plus de 50 % en poids d'éthylène,
de 4 % en poids à 20 % en poids, sur la base du poids de la composition adhésive thermofusible, de polymère de propylène, dans lequel le polymère de propylène comprend plus de 50 % en poids de propylène et présente une chaleur de fusion de 5 J/g à 70 J/g, et
pas plus de 5 % en poids de polymère autre que le copolymère d'éthylène/alphaoléfine et le polymère de propylène,
la quantité de copolymère d'éthylène/alpha-oléfine dans la composition adhésive thermofusible étant supérieure à la quantité de polymère de propylène dans la composition adhésive thermofusible ;
de 20 % en poids à 35 % en poids d'une cire ayant un point de fusion goutte, déterminé selon ASTM D3954-15, ne dépassant pas 105 °C, et
au moins 20 % en poids d'un agent tackifiant ayant un point de ramollissement, déterminé selon ASTM D3461-97, inférieur à 120 °C,
la composition présentant une viscosité ne dépassant pas 2000 mPa·s (ne dépassant pas 2000 centipoise (cP)) à 107 °C.

2. Une composition adhésive thermofusible comprenant :
moins de 35 % en poids de teneur totale en polymère, la teneur totale en polymère consistant en un polymère choisi dans le groupe constitué de
copolymère d'éthylène/alpha-oléfine, dans lequel le copolymère d'éthylène/alpha-oléfine comprend plus de 50 % en poids d'éthylène, et
une combinaison de copolymère d'éthylène/alpha-oléfine, dans lequel le copolymère d'éthylène/alpha-oléfine comprend plus de 50 % en poids d'éthylène, et de polymère de propylène, dans lequel le polymère de propylène comprend plus de 50 % en poids de propylène et présente une chaleur de fusion de 5 J/g à 70 J/g ;
de 20 % en poids à 50 % en poids d'un agent tackifiant ayant un point de ramollissement, déterminé selon ASTM D3461-97, inférieur à 120 °C, et
de 20 % en poids à 35 % en poids d'une cire ayant un point de fusion goutte, déterminé selon ASTM D3954-15, ne dépassant pas 105 °C,
la composition adhésive thermofusible
présentant une viscosité ne dépassant pas 1200 mPa·s (ne dépassant pas 1200 cP) à 107 °C et une température de rupture d'adhésion par pelage (PAFT), déterminée comme défini dans la description, supérieure à 45 °C, et
et étant exempte de cire de paraffine.

3. La composition adhésive thermofusible selon la revendication 1, dans laquelle la composition présente une viscosité ne dépassant pas 1800 mPa·s (ne dépassant pas 1800 cP) à 107 °C, ne dépassant pas 1500 mPa·s (ne dépassant pas 1500 cP) à 107 °C, ou ne dépassant pas 1200 mPa·s (ne dépassant pas 1200 cP) à 107 °C.

4. La composition adhésive thermofusible selon l'une quelconque des revendications 1 à 3, dans laquelle la composition présente un point de ramollissement inférieur à 99 °C.

5. La composition adhésive thermofusible selon l'une quelconque des revendications 1 à 3, dans laquelle la composition présente un point de ramollissement ne dépassant pas 97 °C.

6. Composition adhésive thermofusible selon l'une quelconque des revendications 1 à 5, dans laquelle l'agent tackifiant présente un point de ramollissement ne dépassant pas 115 °C.

7. La composition adhésive thermofusible selon l'une quelconque des revendications 1 à 5, dans laquelle l'agent tackifiant a un point de ramollissement ne dépassant pas 110 °C.

8. La composition adhésive thermofusible selon l'une quelconque des revendications 2 ou 4 à 7, dans laquelle la quantité de copolymère d'éthylène/alpha oléfine dans la composition est supérieure à la quantité de polymère de propylène dans la composition.

9. La composition adhésive thermofusible selon l'une quelconque des revendications 1 à 8, dans laquelle le polymère de propylène est un polymère de propylène catalysé sur site unique et présente une masse volumique ne dépassant pas 0,90 g/cm³.

10. La composition adhésive thermofusible selon l'une quelconque des revendications 1 à 9, dans laquelle
le polymère de propylène est un polymère catalysé sur site unique qui présente une masse volumique ne dépassant pas 0,90 g/cm³ et une viscosité ne dépassant pas 10 000 mPa·s (ne dépassant pas 10 000 cP) à 190 °C, et
le copolymère d'éthylène/alpha-oléfine est un polymère catalysé sur site unique qui présente une densité ne dépassant pas 0,90 g/cm³ et une viscosité ne dépassant pas 9000 mPa·s (ne dépassant pas 9000 cP) à 190 °C.

11. La composition adhésive thermofusible selon l'une quelconque des revendications 1 et 3-10, dans laquelle la composition comprend de 20 % en poids à 50 % en poids de l'agent tackifiant ayant un point de ramollissement inférieur à 120 °C.

12. La composition adhésive thermofusible selon l'une quelconque des revendications 1 à 11, dans laquelle la composition présente une liaison de rupture de fibre à 4 °C.

13. La composition adhésive thermofusible selon l'une quelconque des revendications 1 à 12, dans laquelle la composition présente une PAFT, déterminée telle que définie dans la description, d'au moins 45 °C, et dans laquelle de préférence la composition présente une PAFT, déterminée telle que définie dans la description, d'au moins 49 °C.

14. La composition adhésive thermofusible selon l'une quelconque des revendications 1 à 13, comprenant en outre un agent tackifiant ayant un point de ramollissement d'au moins 120 °C, la quantité d'agent tackifiant ayant un point de ramollissement inférieur à 120 °C étant supérieure à la quantité d'agent tackifiant ayant un point de ramollissement d'au moins 120 °C.

15. Un article comprenant :
un premier substrat ;
un deuxième substrat ;
et la composition adhésive thermofusible selon l'une quelconque des revendications 1 à 14, le premier substrat étant adhéré au deuxième substrat par l'intermédiaire de la composition adhésive.
